(19) **Europäisches Patentamt / European Patent Office / Office européen des brevets**

(11) **EP 3 969 736 B1**

(12) **FASCICULE DE BREVET EUROPEEN**

(45) Date de publication et mention de la délivrance du brevet:
**20.03.2024 Bulletin 2024/12**

(21) Numéro de dépôt: **20725551.4**

(22) Date de dépôt: **15.05.2020**

(51) Classification Internationale des Brevets (IPC):
*F02C 6/08* (2006.01)   *F02C 9/16* (2006.01)
*F02C 9/18* (2006.01)

(52) Classification Coopérative des Brevets (CPC):
**F02C 6/08; F02C 9/18; F04D 27/0215;**
**F04D 27/023;** F05D 2260/80

(86) Numéro de dépôt international:
**PCT/EP2020/063596**

(87) Numéro de publication internationale:
**WO 2020/229655 (19.11.2020 Gazette 2020/47)**

(54) **PROCÉDÉ ET DISPOSITIF D'ESTIMATION D'UNE ZONE MORTE D'UNE VANNE DE DÉCHARGE DE TURBOMACHINE**

**VERFAHREN UND VORRICHTUNG ZUR SCHÄTZUNG EINER TOTZONE EINES TURBOMASCHINENAUSLASSVENTILS**

**METHOD AND DEVICE FOR ESTIMATING A DEAD ZONE OF A TURBOMACHINE DISCHARGE VALVE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.05.2019 FR 1905102**

(43) Date de publication de la demande:
**23.03.2022 Bulletin 2022/12**

(73) Titulaire: **SAFRAN AIRCRAFT ENGINES**
**75015 Paris (FR)**

(72) Inventeurs:
• **DENEUVE, Sébastien Jean Fernand**
**77550 MOISSY-CRAMAYEL (FR)**

• **TRONCHE, Jérôme Pascal Laurent Patrick**
**77550 MOISSY-CRAMAYEL (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
**EP-A1- 2 060 746      FR-A1- 3 022 606**
**US-A1- 2007 240 677**

**Description**

L'invention concerne un procédé et un dispositif d'estimation d'une zone morte de fermeture d'une vanne de décharge de turbomachine.

Un domaine d'application concerne les turbomachines d'aéronefs, comme par exemple les turboréacteurs d'aéronefs.

Le document US2007/240677 décrit un procédé de commande d'une vanne à clapet pour la recirculation de gaz, dans lequel une bande morte est prise en compte.

Les vannes de décharge (en anglais : VBV pour « variable bleed vanne ») permettent de décharger une partie du flux primaire dans le flux secondaire.

L'invention s'applique en particulier à des vannes de décharge comportant chacune une porte actionnée en pivotement sur une charnière par un vérin, pour ouvrir et fermer un orifice ménagé sur une paroi d'un carter qui délimite en partie une paroi extérieure d'une veine de flux primaire de la turbomachine. Les portes sont généralement installées sur une virole intérieure d'un carter structural de la turbomachine, pouvant être par exemple un carter intermédiaire qui peut notamment constituer un chemin d'efforts pour la suspension de la turbomachine à une structure d'un aéronef telle qu'un pylône. La virole intérieure du carter structural présente une paroi qui intérieurement fait face à la veine de flux primaire. L'ouverture des portes permet de décharger une partie du débit du flux primaire vers une veine de flux secondaire de la turbomachine, en traversant un compartiment inter-veines qui sépare la veine de flux primaire de la veine de flux secondaire. Chaque porte est équipée d'un joint d'étanchéité, qui est comprimé contre l'orifice pour que ce dernier puisse être fermé avec une bonne étanchéité.

Toutefois, il existe une plage angulaire de déplacement de la porte, appelée zone morte de fermeture, durant laquelle le joint reste comprimé pendant l'ouverture de la porte et ne laisse donc pas passer le flux primaire vers le flux secondaire. En d'autres termes, tant que la position de la porte reste dans la plage de zone morte, la porte reste étanche alors qu'elle n'est pas complètement fermée.

On cherche à estimer quelle est la zone morte sur chaque turbomachine puisque celle-ci diffère sur chaque turbomachine à cause notamment des dispersions de montage et de fabrication.

Une possibilité est de réaliser des essais de caractérisation de la zone morte de chaque turbomachine, en déterminant la perméabilité de ses vannes de décharge, c'est-à-dire l'angle à partir duquel les portes sont étanches. Ces essais consistent à balayer différents angles de la porte à régime fixé. Ces essais sont chronophages et doivent être effectués pour chaque point de fonctionnement où l'on souhaite connaître la zone morte.

L'invention vise à obtenir un procédé et un dispositif d'estimation de zone morte, qui ne nécessitent pas la réalisation d'un essai spécifique sur chaque turbomachine.

A cet effet, un premier objet de l'invention est un procédé d'estimation d'estimation d'une zone morte de fermeture d'une première porte d'une première vanne de décharge montée sur un premier carter d'une turbomachine à étudier pouvant fonctionner en vol pour propulser un aéronef, le premier carter délimitant intérieurement un flux primaire de gaz de celle-ci, la première porte étant prévue pour pouvoir être déplacée angulairement par un premier vérin en fonction d'un premier signal de commande du premier vérin entre l'une et l'autre :

- d'une première position d'ouverture d'un premier orifice du premier carter configurée pour décharger par ce premier orifice une partie du flux primaire dans un flux secondaire de gaz situé à l'extérieur du premier carter,
- et d'une première position de fermeture du premier orifice configurée pour empêcher le flux primaire de passer à travers le premier orifice,

la première porte étant munie d'un premier joint d'étanchéité au gaz, apte à être comprimé contre un premier bord du premier orifice dans la première position de fermeture pour étanchéifier la fermeture du premier orifice,
caractérisé en ce que
on mesure, pour la turbomachine à étudier fonctionnant en vol, la première position réelle du premier vérin lorsque le premier signal de commande est égal à un premier signal de consigne de fermeture de la première porte,
on détermine à partir de la première position réelle un angle de statisme mesuré de la première porte par rapport au premier carter,
on détermine ou calcule, pour la turbomachine à étudier fonctionnant en vol, une zone morte de fermeture mesurée de la première porte, dans laquelle le premier joint reste comprimé et étanchéifie ainsi la fermeture du premier orifice, par le fait que la zone morte de fermeture mesurée est égale à une zone morte de référence, qui a été prédéterminée en fonctionnement au sol sur une turbomachine de référence pouvant fonctionner en vol et au sol, à laquelle a été ajouté l'angle de statisme mesuré et à laquelle a été soustrait un angle de statisme de référence ayant été prédéterminé sur la turbomachine de référence fonctionnant en vol pour propulser un aéronef.

L'invention définit ainsi un estimateur de zone morte basée sur des mesures de statisme qui peuvent être obtenues « en passager » d'autres essais et ne nécessitent donc pas la réalisation d'un essai spécifique.

Suivant un mode de réalisation de l'invention, pouvant être appliqué au procédé d'estimation et/ou au dispositif d'estimation, la turbomachine de référence a une deuxième porte d'une deuxième vanne de décharge montée sur un deuxième carter de la turbomachine de référence, le deuxième carter délimitant intérieurement un flux primaire de gaz de la turbomachine de référence, la deuxième porte étant prévue pour pouvoir être déplacée angulairement par un deuxième vérin en fonction d'un deuxième signal de commande du deuxième vérin entre l'une et l'autre :

- d'une deuxième position d'ouverture d'un deuxième orifice du deuxième carter pour décharger par ce deuxième orifice une partie du flux primaire dans un flux secondaire de gaz de la turbomachine de référence situé à l'extérieur du deuxième carter,
- et d'une deuxième position de fermeture du deuxième orifice pour empêcher le flux primaire de passer à travers le deuxième orifice,

la deuxième porte étant munie d'un deuxième joint d'étanchéité au gaz, apte à être comprimé contre un deuxième bord du deuxième orifice dans la deuxième position de fermeture pour étanchéifier la fermeture du deuxième orifice.

Suivant un mode de réalisation de l'invention, on détermine, pour la turbomachine de référence fonctionnant au sol, la zone morte de référence qui est une deuxième plage angulaire de fermeture de la deuxième porte, pendant laquelle entre la deuxième position de fermeture et la deuxième position d'ouverture le deuxième joint reste comprimé et étanchéifie ainsi la fermeture du deuxième orifice.

Suivant un mode de réalisation de l'invention, on détermine, pour la turbomachine à étudier fonctionnant en vol, un premier régime de rotation d'un premier compresseur haute pression de la turbomachine à étudier, et des paramètres de fonctionnement mesurés comprenant au moins une grandeur choisie parmi une première pression atmosphérique et une première altitude,

on détermine, à partir d'un modèle de la turbomachine de référence donnant un deuxième angle de porte de la turbomachine de référence par rapport au deuxième carter de la turbomachine de référence en fonction d'un deuxième régime de rotation du deuxième compresseur haute pression de la turbomachine de référence et d'une deuxième pression atmosphérique de la turbomachine de référence ou d'une deuxième altitude de fonctionnement de la turbomachine de référence, l'angle de statisme de référence, qui est le deuxième angle de porte de la turbomachine de référence, qui correspond selon le modèle aux paramètres de fonctionnement mesurés,

le deuxième angle de porte correspondant à un angle de la deuxième porte par rapport au deuxième carter, qui a été déterminé à partir d'une deuxième position réelle du deuxième vérin, ayant elle-même été mesurée pour la turbomachine de référence fonctionnant en vol, lorsque le deuxième signal de commande est égal à un deuxième signal de consigne de fermeture de la deuxième porte.

Un deuxième objet de l'invention est un dispositif d'estimation d'une zone morte de fermeture d'une première porte d'une première vanne de décharge montée sur un premier carter d'une turbomachine à étudier pouvant fonctionner en vol pour propulser un aéronef, le premier carter délimitant intérieurement un flux primaire de gaz de celle-ci, la première porte étant prévue pour pouvoir être déplacée angulairement par un premier vérin en fonction d'un premier signal de commande du premier vérin entre l'une et l'autre :

- d'une première position d'ouverture d'un premier orifice du premier carter configurée pour décharger par ce premier orifice une partie du flux primaire dans un flux secondaire de gaz situé à l'extérieur du premier carter,
- et d'une première position de fermeture du premier orifice configurée pour empêcher le flux primaire de passer à travers le premier orifice,

la première porte étant munie d'un premier joint d'étanchéité au gaz, apte à être comprimé contre un premier bord du premier orifice dans la première position de fermeture pour étanchéifier la fermeture du premier orifice, caractérisé en ce que le dispositif d'estimation comporte un moyen de mesure pour mesurer, pour la turbomachine à étudier fonctionnant en vol, la première position réelle du premier vérin lorsque le premier signal de commande est égal à un premier signal de consigne de fermeture de la première porte, un calculateur configuré pour :

- déterminer à partir de la première position réelle un angle de statisme mesuré de la première porte par rapport au premier carter,
- déterminer ou calculer, pour la turbomachine à étudier fonctionnant en vol, une zone morte de fermeture mesurée de la première porte, dans laquelle le premier joint reste comprimé et étanchéifie ainsi la fermeture du premier orifice, par le fait que la zone morte de fermeture mesurée est égale à une zone morte de référence, qui a été prédéterminée en fonctionnement au sol sur une turbomachine de référence pouvant fonctionner en vol et au sol, à laquelle a été ajouté l'angle de statisme mesuré et à laquelle a été soustrait un angle de statisme de référence ayant été prédéterminé sur la turbomachine de référence fonctionnant en vol pour propulser un aéronef.

Suivant un mode de réalisation de l'invention, le dispositif d'estimation comporte un moyen de mesure pour déterminer, pour la turbomachine de référence fonctionnant au sol, la zone morte de référence qui est une deuxième plage angulaire de fermeture de la deuxième porte, pendant laquelle entre la deuxième position de fermeture et la deuxième position d'ouverture le deuxième joint reste comprimé et étanchéifie ainsi la fermeture du deuxième orifice.

Suivant un mode de réalisation de l'invention, le dispositif d'estimation comporte des capteurs de mesure embarqués sur la première turbomachine pour déterminer, pour la turbomachine à étudier fonctionnant en vol, un premier régime de rotation d'un premier compresseur haute pression de la turbomachine, et des paramètres de fonctionnement mesurés comprenant au moins une grandeur choisie parmi une première pression atmosphérique et une première altitude,

le calculateur étant configuré pour déterminer, à partir d'un modèle de la turbomachine de référence donnant un deuxième angle de porte de la turbomachine de référence par rapport au deuxième carter de la turbomachine de référence en fonction d'un deuxième régime de rotation du deuxième compresseur haute pression de la turbomachine de référence et d'une deuxième pression atmosphérique de la turbomachine de référence ou d'une deuxième altitude de fonctionnement de la turbomachine de référence, l'angle de statisme de référence, qui est le deuxième angle de porte de la turbomachine de référence, qui correspond selon le modèle aux paramètres de fonctionnement mesurés,

un moyen de mesure pour mesurer, pour la turbomachine de référence fonctionnant en vol, une deuxième position réelle du deuxième vérin, lorsque le deuxième signal de commande est égal à un deuxième signal de consigne de fermeture de la deuxième porte,

le calculateur étant configuré pour déterminer le deuxième angle de porte correspondant à l'angle de la deuxième porte par rapport au deuxième carter, à partir de la deuxième position réelle du deuxième vérin, ayant été mesurée.

L'invention sera mieux comprise à la lecture de la description qui va suivre, donnée uniquement à titre d'exemple non limitatif en référence aux dessins annexés, sur lesquels :

- la figure 1 représente schématiquement en coupe longitudinale un exemple de turbomachine à laquelle peuvent s'appliquer le dispositif et le procédé d'estimation suivant l'invention,
- la figure 2 représente schématiquement en coupe longitudinale une vue agrandie en position de fermeture d'une porte d'un carter intermédiaire de la turbomachine de la figure 1, à laquelle peuvent s'appliquer le dispositif et le procédé d'estimation suivant l'invention,
- la figure 3 représente schématiquement en coupe longitudinale une vue agrandie en position de fermeture d'une porte d'un carter intermédiaire de la turbomachine de la figure 1, à laquelle peuvent s'appliquer le dispositif et le procédé d'estimation suivant l'invention,
- la figure 4 représente schématiquement en coupe longitudinale une vue agrandie en position de fermeture d'une porte d'un carter intermédiaire de la turbomachine de la figure 1, à laquelle peuvent s'appliquer le dispositif et le procédé d'estimation suivant l'invention,
- la figure 5 représente schématiquement en coupe longitudinale une vue agrandie en position de fermeture d'une porte d'un carter intermédiaire de la turbomachine de la figure 1, à laquelle peuvent s'appliquer le dispositif et le procédé d'estimation suivant l'invention,
- la figure 6 représente schématiquement en coupe longitudinale en coupe longitudinale une vue agrandie en position d'ouverture d'une porte d'un carter intermédiaire de la turbomachine de la figure 1, à laquelle peuvent s'appliquer le dispositif et le procédé d'estimation suivant l'invention,
- la figure 7 représente schématiquement des efforts apparaissant sur la porte du carter intermédiaire de la figure 6,
- la figure 8 représente schématiquement en coupe longitudinale une vue agrandie en position de fermeture d'une porte d'un carter intermédiaire de la turbomachine de la figure 1, à laquelle peuvent s'appliquer le dispositif et le procédé d'estimation suivant l'invention,
- la figure 9 représente schématiquement des efforts apparaissant sur la porte du carter intermédiaire de la figure 8,
- la figure 10 est un diagramme représentant respectivement des forces pouvant apparaître lors d'une commande de la porte de la turbomachine selon les figures 1 à 5,
- la figure 11 est un diagramme représentant respectivement des angles de porte pouvant apparaître lors d'une commande de la porte de la turbomachine selon les figures 1 à 5,
- la figure 12 est un diagramme représentant des différences de pression pouvant apparaître lors d'une commande de la porte de la turbomachine selon les figures 1 à 5,
- la figure 13 représente schématiquement en coupe longitudinale une vue agrandie en position de fermeture d'une porte d'un carter intermédiaire de la turbomachine de la figure 1, à laquelle peuvent s'appliquer le dispositif et le procédé d'estimation suivant l'invention,
- la figure 14 représente schématiquement des efforts apparaissant sur la porte du carter intermédiaire de la figure 13,
- la figure 15 représente schématiquement une cartographie d'une zone morte de référence, pouvant être utilisée par le dispositif et le procédé d'estimation suivant l'invention,
- les figures 16 et 17 représentent schématiquement la composition de la zone morte de première et deuxième turbomachines,
- la figure 18 est un synoptique modulaire d'un exemple d'estimateur de zone morte mettant en oeuvre le dispositif et le procédé d'estimation suivant l'invention,

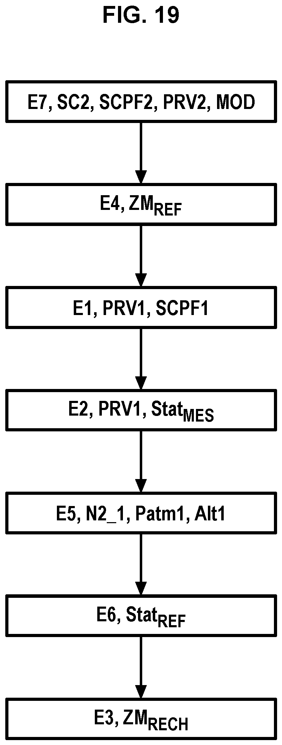

- la figure 19 est un exemple d'organigramme du procédé d'estimation suivant l'invention.

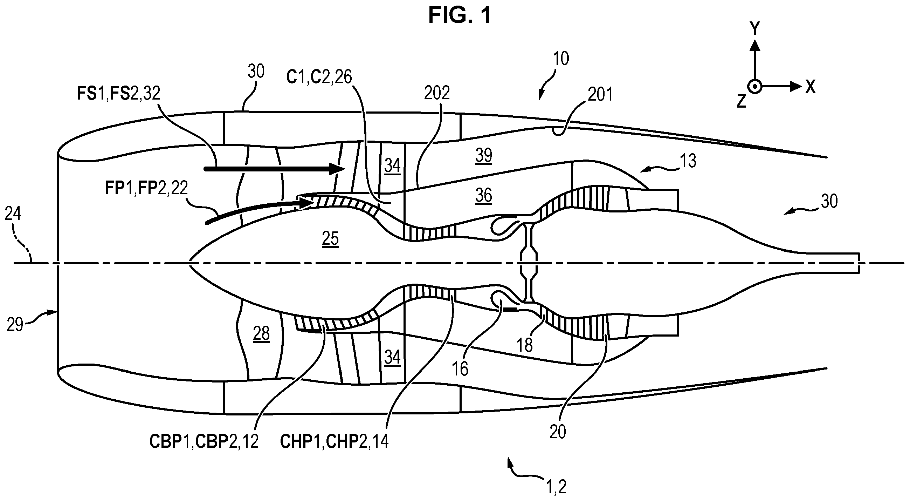

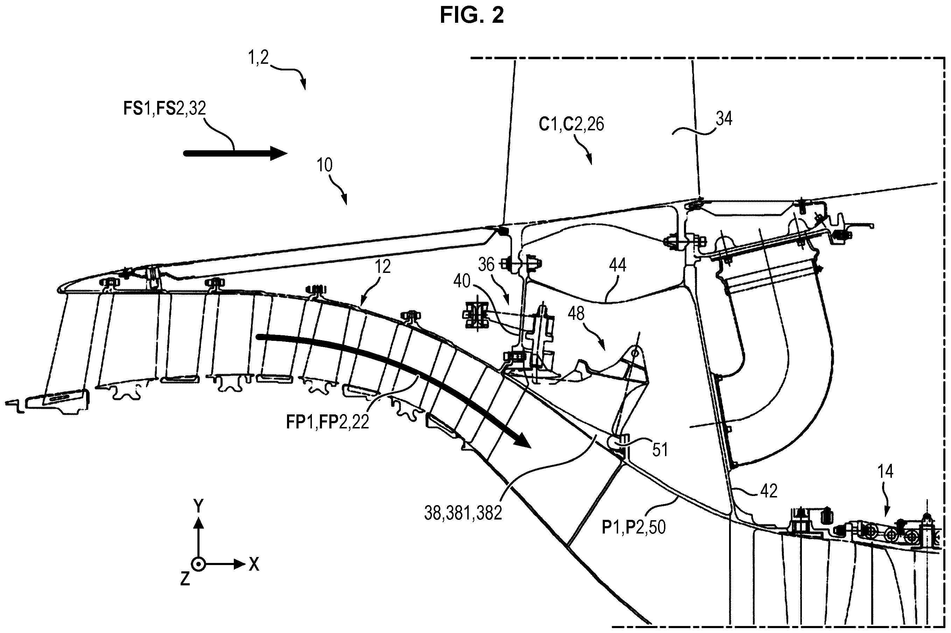

Un exemple de turbomachine à double flux est représenté aux figures 1 et 2. La turbomachine 10, 1, 2 est destinée à être installée sur un aéronef non représenté pour le propulser dans les airs. L'ensemble moteur à turbine à gaz ou turbomachine 10 a un axe longitudinal 24. La direction allant de l'intérieur vers l'extérieur est la direction radiale partant de l'axe longitudinal 24. La turbomachine 10 est par exemple à double corps. La turbomachine 10 comprend un ensemble de soufflante 28 et un ensemble 13 pour la génération de gaz de combustion et leur utilisation, également appelé « générateur de gaz ». Le générateur de gaz 13 comprend, de l'amont vers l'aval dans le sens d'écoulement des gaz, un compresseur basse pression 12, un compresseur haute pression 14, une chambre de combustion 16, une turbine haute pression 18 et une turbine basse pression 20 qui définissent un flux primaire de gaz 22. L'ensemble de soufflante 28 comprend un réseau de pales de soufflante s'étendant radialement vers l'extérieur depuis un disque de rotor 25. La turbomachine 10 a un côté d'admission 29 et un côté d'échappement 30. La turbomachine 10 comprend également un ensemble de carters qui définit un compartiment inter-veines 36 également appelé « zone core », situé entre une veine de flux primaire et une veine de flux secondaire de la turbomachine à double flux. Une partie amont du compartiment inter-veines 36 est formée par un carter structural 26 relié par des bras 34 à la paroi interne 201 du carénage 30 à travers le conduit de dérivation 39 du flux secondaire 32. Ce carter structural 26 est par exemple un carter intermédiaire, et sera dénommé comme tel dans la description de l'exemple de réalisation qui suit, mais d'autres types de carters structuraux sont possibles, par exemple un carter inter-compresseurs interposé entre le compresseur basse pression 12 et le compresseur haute pression 14.

En fonctionnement, l'air s'écoule à travers l'ensemble de soufflante 12 et une première partie 22 (flux primaire 22) du flux d'air est acheminée à travers le compresseur haute pression 14, dans lequel le flux d'air est comprimé et envoyé à la chambre de combustion 16.

Les produits de combustion chauds (non représentés sur les figures) provenant de la chambre de combustion 16 sont utilisés pour entraîner les turbines 18 et 20, et la turbine basse pression 20 est reliée à l'ensemble de soufflante 28 pour produire la majeure partie de la poussée de la turbomachine 10. La turbomachine 10 comprend également un conduit de dérivation 39 qui est utilisé pour faire passer une seconde partie 32 (flux secondaire 32) du flux d'air évacué de l'ensemble de soufflante 28 autour du moteur à turbine à gaz central 13. Plus précisément, le conduit de dérivation 39 s'étend entre une paroi interne 201 d'un carénage 30 de soufflante ou nacelle 30 et une enveloppe externe 202 du compartiment inter-veines 36, également appelée IFD pour « inner fan duct » en anglais (en français : conduit interne de souflante)..

Aux figures 2 à 5, le carter intermédiaire 26 comporte une paroi interne 38 délimitant intérieurement l'espace d'écoulement du flux primaire 22, une joue amont 40 et une joue aval 42 raccordées à la surface extérieure de la paroi interne 38, et une paroi externe 44 reliant extérieurement la joue amont 40 et la joue aval 42. Les bras 34 sont fixés aux extrémités externes de la joue amont 40 et de la joue aval 42. Le carter intermédiaire 26 est équipé d'une vanne 48 de décharge, ou de plusieurs vannes 48 de décharge.

On considère une première turbomachine 1, appelée turbomachine à étudier, analogue à la turbomachine 10 telle que décrite ci-dessus, pour laquelle on va déterminer la zone morte $ZM_{RECH}$ de fermeture. Les signes de référence suivants, se terminant par 1, désignent les parties et variables de cette première turbomachine 1, introduites par l'adjectif « premier », dont celles mentionnées ci-dessus aux figures 1 à 5 sont rappelées.

On considère également une deuxième turbomachine 2, appelée turbomachine de référence, analogue à la turbomachine 10 telle que décrite ci-dessus, pour laquelle on a déterminé la zone morte $ZM_{REF}$ de référence. Les signes de référence suivants, se terminant par 2, désignent les parties et variables de cette deuxième turbomachine 2, introduites par l'adjectif « deuxième », dont celles mentionnées ci-dessus aux figures 1 à 5 sont rappelées. Bien entendu, ce qui est décrit pour la première turbomachine 1 ci-dessous est également valable pour la deuxième turbomachine 2. Bien entendu, la turbomachine de référence 2 ou deuxième turbomachine 2 peut être différente de celle décrite ci-dessous et ci-dessus.

Sur la première turbomachine 1, chaque première vanne VBV1, 48 de décharge comporte une première porte 50, P1 montée sur le premier carter intermédiaire 26, C1. Le premier carter 26, C1 délimite intérieurement le premier flux primaire 22, FP1 de gaz. La première porte 50, P1 est montée pivotante sur une charnière 51 et est reliée à un premier vérin V1 prévu pour pouvoir déplacer angulairement la première porte 50, P1 en fonction d'un premier signal SC1 de commande du premier vérin V1. La première paroi interne 38, 381 du premier carter intermédiaire 26, C1 comporte un premier orifice O1 de forme correspondant à la première porte 50, P1. Il peut être prévu un certain nombre N de premières portes 50, P1 sur le premier carter intermédiaire 26, C1, actionnées par un certain nombre M de premiers vérins, avec par exemple M < N. par exemple le ou les premier(s) vérins(s) V1 actionne une ou des première(s) porte(s) 50, P1 dite menante(s), et l'ensemble des premières portes 50, P1 est relié via un anneau qui permet d'avoir un actionnement uniforme des premières portes 50, P1. Le besoin de déchargement du premier compresseur basse pression 12, CBP1 se traduit par des lois de protection. Ces lois étant une représentation d'un débit réel de décharge en fonction de la configuration et de l'état du moteur, elles doivent tenir compte de la section efficace réelle de la première porte et donc de la zone morte qui affecte ce débit.

Le premier vérin V1 comporte un premier corps CV1 de vérin fixe par rapport au premier carter intermédiaire 26, C1 et une première tige T1 mobile en translation par rapport au premier corps CV1 de vérin. Au moins un premier organe BI1 de connexion, comportant par exemple une bielle BI1 et des dispositifs d'articulation, est monté entre la première tige T1 et la première porte P1 pour déplacer angulairement la première porte P1 par déplacement en translation de la première tige T1 par rapport au premier corps CV1 de vérin. Le premier vérin V1 peut être un vérin hydraulique dont le déplacement en translation de la tige mobile T1 est commandé par différence de pression d'huile de part et d'autre d'un piston coulissant dans le corps CV1.

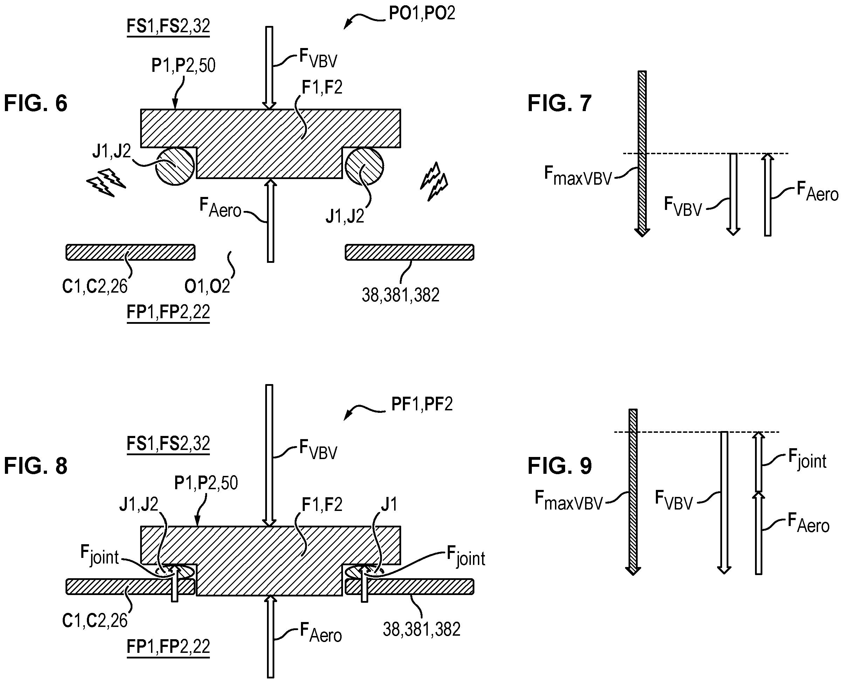

La première porte 50, P1 comporte aux figures 6 et 7 une première position PO1 d'ouverture du premier orifice O1, où le premier joint J1 est à distance du premier bord B1, pour décharger par ce premier orifice O1 une partie du premier flux primaire FP1, 22 dans le premier flux secondaire FS1, 32 de gaz situé à l'extérieur du premier carter intermédiaire 26, C1.

La première porte 50, P1 comporte aux figures 8 et 9 une première position PF1 de fermeture du premier orifice O1 pour ne pas laisser passer par le premier orifice O1 le premier flux primaire FP1, 22 dans le premier flux secondaire FS1, 32. Le premier vérin V1 permet de déplacer la première porte 50, P1 de la première position PO1 d'ouverture à la première position PF1 de fermeture dans un sens de fermeture, et de la première position PF1 de fermeture à la première position PO1 d'ouverture dans un sens d'ouverture.

La première porte 50, P1 est munie d'un premier joint J1 d'étanchéité au gaz, apte à être comprimé contre un premier bord B1 du premier orifice O1 dans la première position PF1 de fermeture pour ne pas laisser passer par le premier orifice O1 le premier flux primaire FP1 dans le premier flux secondaire FS1.

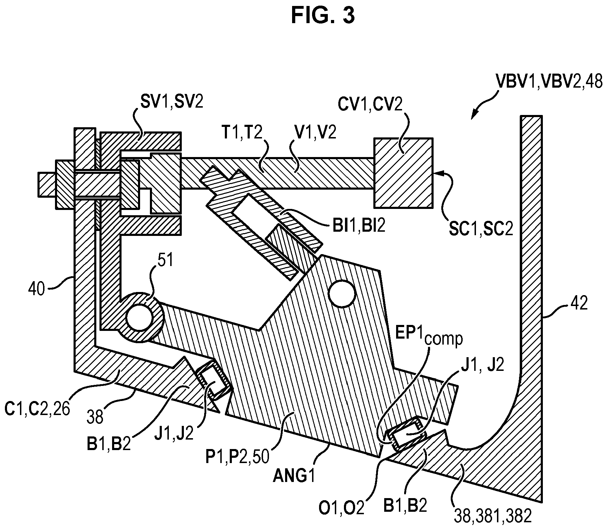

Aux figures 3, 4, 5, 6, 8 et 13, chaque première porte 50, P1 comporte une première fonderie F1 de porte contre laquelle est fixé le premier joint J1 d'étanchéité.

Aux figures 6 et 7, lorsque la première porte 50, P1 est dans la première position PO1 d'ouverture, l'effort $F_{VBV}$ dans le premier vérin V1 équilibre l'effort aérodynamique $F_{Aero}$.

Aux figures 8 et 9, lorsque la première porte 50, P1 est dans la première position PF1 de fermeture, le premier joint J1 d'étanchéité est comprimé contre le premier bord B1 du premier carter intermédiaire 26, C1 de sorte à assurer l'étanchéité de la première porte 50, P1 et d'assurer une veine primaire lisse dans l'espace d'écoulement du flux primaire 22, c'est-à-dire que la première porte 50, P1 est alignée avec la première paroi interne 38, 381. L'effort $F_{VBV}$ dans le premier vérin V1 équilibre alors l'effort aérodynamique $F_{Aero}$, qui dépend du point de fonctionnement et les efforts $F_{joint}$ de compression du joint, qui dépendent de la position angulaire de la première porte 50, P1 et donc de l'enfoncement de la première porte 50, P1 dans la veine primaire.

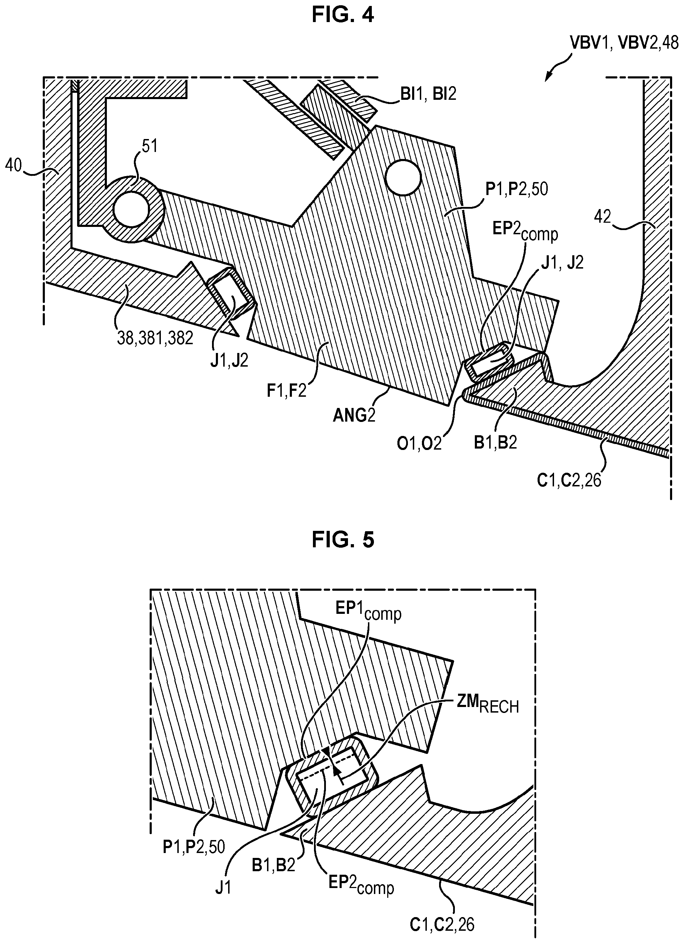

Dans la première position PF1 de fermeture, la première porte 50, P1 peut occuper par rapport au rapport au premier carter 26, C1, C2 plusieurs angles différents situés dans une certaine plage angulaire, appelée zone morte $ZM_{RECH}$ de fermeture mesurée, qui est due à la souplesse du premier joint J1 d'étanchéité et pendant laquelle le premier joint J1 ne laisse pas passer par le premier orifice O1 le premier flux primaire FP1 dans le premier flux secondaire FS1 (section efficace nulle dans ce cas pour la première porte 50, P1). Par exemple, aux figures 3 et 5, la première porte 50, P1 peut occuper dans la première position PF1 de fermeture un certain angle ANG1 par rapport au premier carter 26, C1, C2, ce qui fait prendre au premier joint J1 une certaine épaisseur $EP1_{comp}$ de compression contre le premier bord B1, où le premier joint J1 ne laisse pas passer par le premier orifice O1 le premier flux primaire FP1 dans le premier flux secondaire FS1. Aux figures 4 et 5, la première porte 50, P1 peut occuper dans la première position PF1 de fermeture un autre angle ANG2 plus enfoncé dans la veine primaire qu'avec l'angle ANG1, ce qui fait prendre au premier joint J1 une épaisseur $EP2_{comp}$ de compression contre le premier bord B1, qui est plus petite que l'épaisseur $EP1_{comp}$ de compression et où le premier joint J1 ne laisse pas passer par le premier orifice O1 le premier flux primaire FP1 dans le premier flux secondaire FS1. La plage angulaire de la première porte 50, P1 correspondant à la différence entre l'épaisseur $EP1_{comp}$ de compression et l'épaisseur $EP2_{comp}$ de compression est incluse dans la zone morte $ZM_{RECH}$ de fermeture mesurée.

Suivant l'invention, on calcule la zone morte $ZM_{RECH}$ de fermeture mesurée à partir de la zone morte $ZM_{REF}$ de référence ayant été déterminée sur la turbomachine 2 de référence fonctionnant au sol, en la corrigeant par la différence entre le statisme $Stat_{MES}$ mesuré sur de la première porte P1 de la première turbomachine 1 fonctionnant en vol et l'angle $Stat_{REF}$ de statisme de référence ayant été prédéterminé sur la deuxième turbomachine 2 fonctionnant en vol.

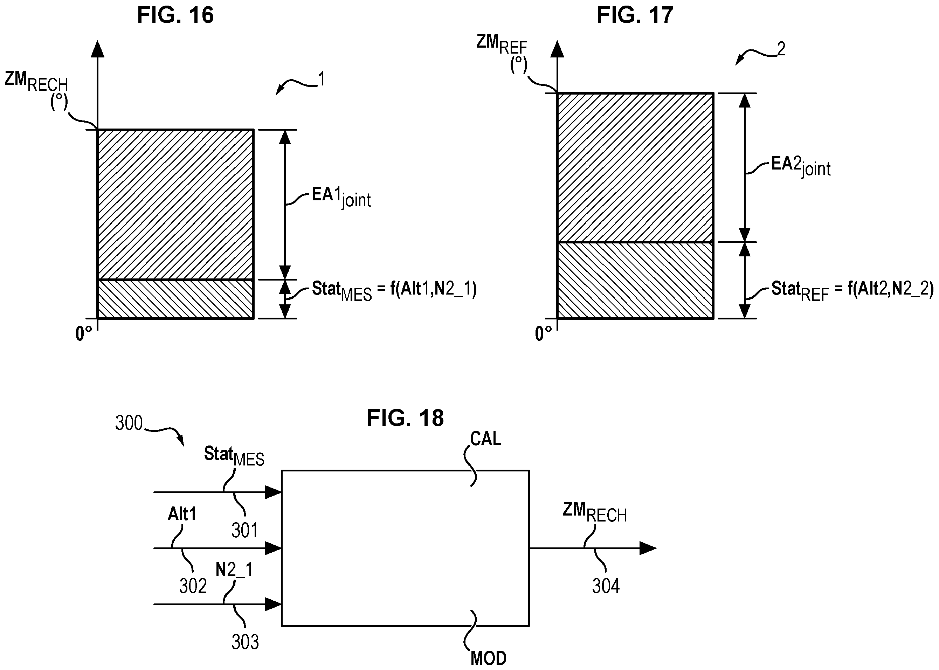

On pourra se reporter ci-dessous aux figures 16 à 18.

Suivant l'invention, au cours d'une étape E1 de mesure, on mesure, pour la première turbomachine 1 fonctionnant en vol, la première position réelle PRV1 du premier vérin V1 lorsque le premier signal SC1 de commande est égal à un premier signal SCPF1 de consigne de fermeture de la première porte P1, par exemple par un capteur de position du premier vérin V1 ou par d'autres moyens de mesure. Par exemple, on mesure la première position réelle PRV1 en translation de la première tige T1 du premier vérin V1 par rapport au premier corps CV1 de vérin.

Au cours d'une étape E2 de détermination postérieure à l'étape E1 de mesure, on détermine à partir de la première position réelle PRV1 un premier angle $Stat_{MES}$ de la première porte P1 par rapport au premier carter C1, appelé angle $Stat_{MES}$ de statisme mesuré, par exemple par un calculateur CAL ou par d'autres moyens de mesure.

Au cours d'une étape E3 de détermination postérieure à l'étape E2 de détermination, on détermine, pour la première turbomachine 1 fonctionnant en vol, la première plage angulaire $ZM_{RECH}$ de fermeture de la première porte P1 appelée zone morte $ZM_{RECH}$ de fermeture mesurée, qui correspond au fait que le premier joint J1 est comprimé pour ne pas laisser passer par le premier orifice O1 le premier flux primaire FP1 dans le premier flux secondaire FS1 et étanchéifie ainsi la fermeture de la première porte P1. La zone morte $ZM_{RECH}$ de fermeture mesurée de la première turbomachine 1 est égale à la zone morte $ZM_{REF}$ de référence, qui a été prédéterminée sur la deuxième turbomachine 2, appelée turbomachine de référence, fonctionnant au sol, à laquelle a été ajouté l'angle $Stat_{MES}$ de statisme mesuré et à laquelle a été soustrait un angle $Stat_{REF}$ de statisme de référence ayant été prédéterminé sur la deuxième turbomachine 2 fonctionnant en vol, selon l'équation suivante :

$$ZM_{RECH} = ZM_{REF} + Stat_{MES} - Stat_{REF}$$

Ainsi, grâce à l'invention, on évite de devoir faire des essais de mesure de zone morte en fonctionnement de chaque première turbomachine 1 en vol, cette zone morte $ZM_{RECH}$ de fermeture mesurée de la première turbomachine 1 dépendant du point de fonctionnement de la première turbomachine 1 et de l'altitude.

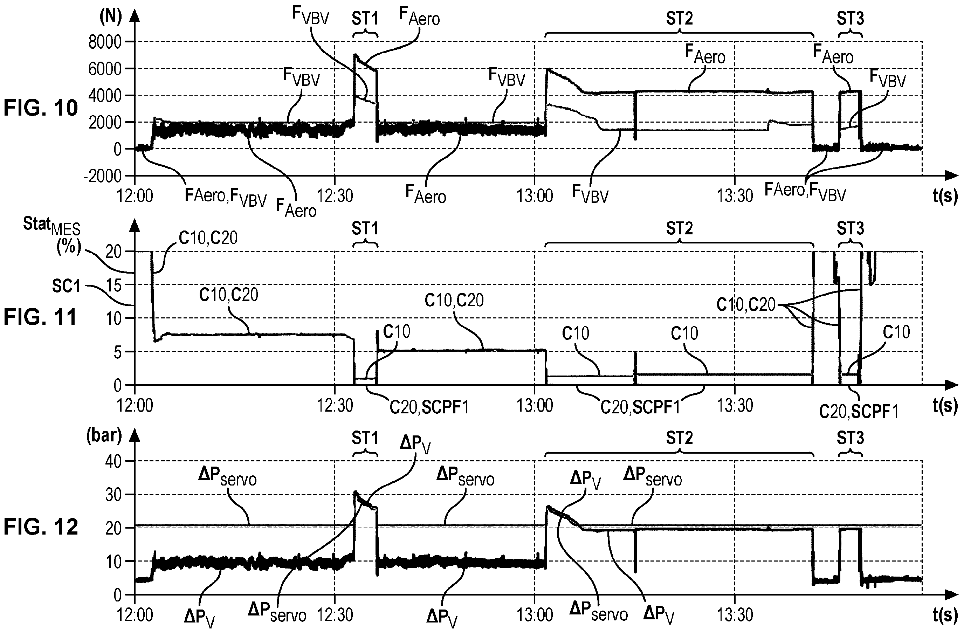

Le statisme de la vanne VBV1, 48 de décharge est un phénomène rencontré sur de nombreux moteurs, majoritairement en altitude. Il se traduit par une incapacité à fermer totalement la première porte 50, P1, où, bien que le premier signal SC1 de commande est égal à un premier signal SCPF1 de consigne de fermeture de la première porte P1, l'angle $Stat_{MES}$ de statisme mesuré n'est pas à sa position de consigne de fermeture à 0° mais à une valeur différente pouvant atteindre environ 1.5°, ainsi que représenté à titre d'exemple par les 3 durées ST1, ST2 et ST3 de statisme aux figures 10, 11 et 12. Le statisme est un phénomène continu et peut prendre par exemple différentes valeurs entre 0° et 3°.

A la figure 11, l'angle $Stat_{MES}$ de statisme mesuré en ordonnées en degrés varie selon la courbe C10, tandis que le premier signal SC1 de commande en ordonnées en degrés varie selon la courbe C20, en fonction du temps t en abscisses en secondes (s). La figure 10 représente de manière correspondante à la figure 11 l'effort $F_{VBV}$ dans le premier vérin V1 en ordonnées en Newton (N) et l'effort aérodynamique $F_{Aero}$ en ordonnées en Newton (N), en fonction du temps t en abscisses en secondes (s). La figure 12 représente de manière correspondante à la figure 11 la différence de pression $\Delta P_{servo}$ aux bornes de la première servo-valve 48, VBV1 et la différence de pression $\Delta P_V$ aux bornes du premier vérin V1 en ordonnées en bar, en fonction du temps t en abscisses en secondes (s). Pendant ces durées ST1, ST2 et ST3 de statisme, l'effort $F_{VBV}$ devient inférieur à l'effort aérodynamique $F_{Aero}$ et la différence de pression $\Delta P_V$ aux bornes du premier vérin V1 devient égale à la différence de pression $\Delta P_{servo}$ aux bornes de la première servo-valve 48, VBV1, ce qui indique que toute la puissance hydraulique du premier vérin V1 est consommée et ne permet pas de fermer complètement la première porte 50, P1.

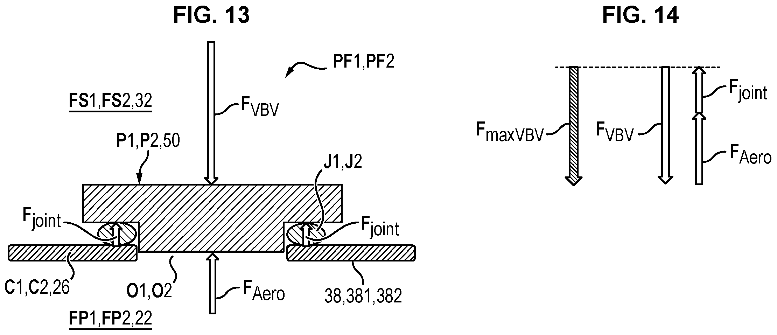

Ce phénomène s'explique par le fait que la compression du premier joint J1 demande un effort de plus en plus important à mesure que l'on enfonce la première porte 50, P1 dans la veine primaire dans la première position PF1 de fermeture. Ainsi lorsque la puissance hydraulique disponible n'est plus suffisante (effet de l'altitude notamment), l'effort nécessaire à la fermeture complète de la première porte 50, P1 ne peut être fourni, ainsi que représenté aux figures 13 et 14, et le premier joint J1 n'est pas complètement comprimé tout en ne laissant pas passer dans la première position PF1 de fermeture le premier flux primaire FP1, 22 par le premier orifice O1 dans le premier flux secondaire FS1, 32, même lorsque l'effort $F_{VBV}$ dans le premier vérin V1 est égal à la force maximale $F_{maxVBV}$. La veine primaire est alors non lisse, c'est-à-dire que dans la première position PF1 de fermeture la première porte 50, P1 n'est pas alignée avec la première paroi interne 38, 381 et est légèrement soulevée par le premier flux primaire 22, FP1 vers le premier flux secondaire 32, FS1.

Suivant un mode de réalisation, pour la deuxième turbomachine 2 servant de référence, au cours d'une étape E4 de détermination antérieure à l'étape E3 de détermination et par exemple antérieure à l'étape E1 de mesure, on détermine, pour la deuxième turbomachine 2 fonctionnant au sol, la zone morte $ZM_{REF}$ de référence qui est une deuxième plage angulaire $ZM_{REF}$ de fermeture de sa deuxième porte 50, P2, pendant laquelle entre sa deuxième position PF2 de fermeture et sa deuxième position PO2 d'ouverture son deuxième joint J2 est comprimé pour ne pas laisser passer par son deuxième orifice O2 son deuxième flux primaire FP2 dans son deuxième flux secondaire FS2, par des moyens de mesure, par exemple sur un banc d'essai au sol. Bien entendu, la zone morte $ZM_{REF}$ de référence peut être déterminée d'une autre manière que selon ce mode de réalisation.

Suivant un mode de réalisation, au cours d'une étape E5 de détermination antérieure à l'étape E3 de détermination, on détermine, pour la première turbomachine 1 fonctionnant en vol, un premier régime $N2\_1$ de rotation du premier compresseur 14, CHP1 haute pression de la première turbomachine 1, et une première pression atmosphérique Patm1 ou une première altitude Alt1, appelés paramètres $N2\_1$, Patm1 ou Alt1 de fonctionnement mesurés, par exemple par des capteurs de mesure embarqués sur la première turbomachine 1 et/ou sur l'aéronef la comportant.

Suivant un mode de réalisation, le calculateur CAL comporte un modèle MOD de la deuxième turbomachine 2 fonctionnant en vol, donnant le deuxième angle $Stat_{REF}$ de porte de la deuxième turbomachine 2 par rapport à son deuxième carter intermédiaire 26, C2 en fonction d'un deuxième régime $N2\_2$ de rotation de son deuxième compresseur 14, CHP2 haute pression et d'une deuxième pression atmosphérique Patm2 de la deuxième turbomachine 2 ou d'une deuxième altitude Alt2 de fonctionnement de la deuxième turbomachine 2.

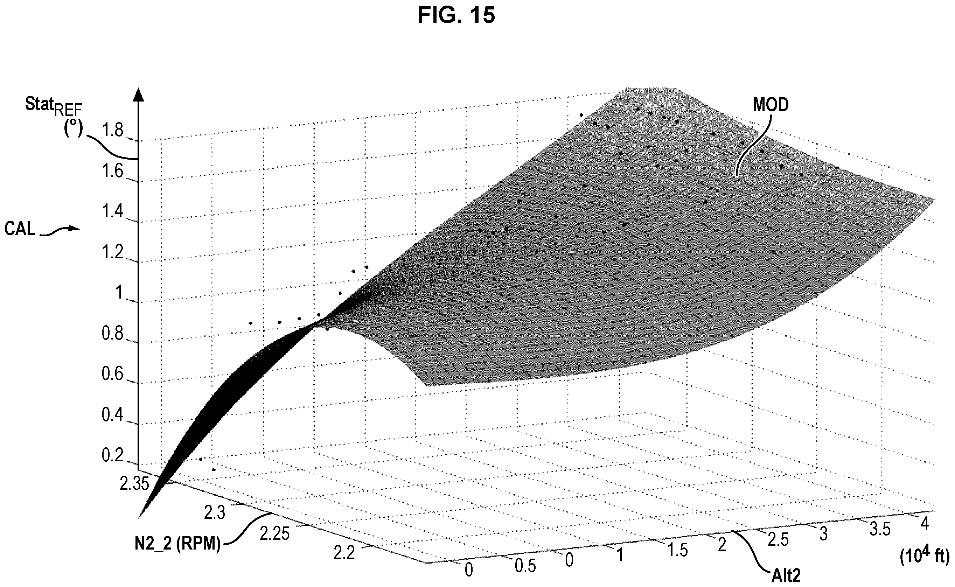

Cela est illustré à titre d'exemple à la figure 15, où le deuxième angle $Stat_{REF}$ est en ordonnées verticale en degrés, le deuxième régime $N2\_2$ de rotation est selon un premier axe horizontal en abscisses en tours par minute (RPM) et la deuxième altitude Alt2 est selon un deuxième axe horizontal en abscisses en $10^4$ pieds ($10^4$ ft), perpendiculaire au premier axe horizontal. La figure 17 illustre la situation de la deuxième turbomachine 2, où en ordonnées la zone morte $ZM_{REF}$ de référence est égale à la somme de l'angle de statisme de référence $Stat_{REF}$ = f(Alt2, N2\_2) du modèle MOD et d'un deuxième écart angulaire $EA2_{joint}$ correspondant à la compression du deuxième joint J2.

La figure 16 illustre la situation de la première turbomachine 1, où en ordonnées la zone morte $ZM_{RECH}$ de fermeture mesurée est égale à la somme de l'angle de statisme mesuré $Stat_{MES}$ = f(Alt1, N2\_1) déterminé à partir du modèle MOD et d'un deuxième écart angulaire $EA1_{joint}$ correspondant à la compression du premier joint J1.

Bien entendu, dans le modèle MOD, la variable « deuxième altitude Alt2 de fonctionnement de la deuxième turbomachine 2 » peut être transformée en la variable « deuxième pression Patm2 de fonctionnement de la deuxième turbomachine 2 » et inversement, étant donné qu'il existe une relation bijective entre celles-ci, ainsi que cela est connu de l'homme du métier.

Suivant un mode de réalisation, au cours d'une étape E6 de détermination antérieure à l'étape E3 de détermination et postérieure à l'étape E5 de détermination, on détermine par le calculateur CAL, à partir du modèle MOD de la deuxième turbomachine 2 fonctionnant en vol, l'angle $Stat_{REF}$ de statisme de référence, qui est le deuxième angle $Stat_{REF}$ de porte de la deuxième porte 50, P2 de la deuxième turbomachine 2, qui correspond selon le modèle MOD aux paramètres $N2\_1$, Patm1 ou Alt1 de fonctionnement mesurés, c'est-à-dire pour $N2\_2$ = $N2\_1$ et Patm2 = Patm1 ou Alt2 = Alt1.

Suivant un mode de réalisation, le deuxième angle $Stat_{REF}$ de porte du modèle MOD correspond à un angle $Stat_{REF}$ de la deuxième porte 50, P2 par rapport au deuxième carter 26, C2 et a été déterminé par exemple par un calculateur ou par d'autres moyens de mesure au cours d'une étape E7 de détermination antérieure à l'étape E6 de détermination et par exemple antérieure à l'étape E1 de mesure, à partir d'une deuxième position réelle PRV2 du deuxième vérin V2, ayant elle-même été mesurée pour la deuxième turbomachine 2 fonctionnant en vol par exemple sur un banc d'essai en vol par un capteur de position du deuxième vérin V2 ou par d'autres moyens de mesure, lorsque son deuxième signal SC2 de commande est égal à un deuxième signal SCPF2 de consigne de fermeture de la deuxième porte P2.

Le calculateur CAL et les moyens de mesure ou capteurs décrits ci-dessus peuvent faire partie d'un dispositif d'estimation ou estimateur, mettant en oeuvre le procédé d'estimation décrit ci-dessus. Le calculateur CAL fonctionne d'une manière automatisée et peut être réalisé par un processeur ou un ordinateur ou un serveur, qui sont munis de programmes informatiques de traitement pour effectuer les traitements décrits ci-dessous et de mémoires permanentes pour y enregistrer les données et les traitements effectués. A la figure 18, un exemple d'un tel estimateur 300 comporte une première entrée 301 de réception de l'angle $Stat_{MES}$ de statisme mesuré, une deuxième entrée 302 de réception de la première altitude Alt1, une troisième entrée 302 de réception du premier régime $N2\_1$ de rotation et une sortie 304 de fourniture de la zone morte $ZM_{RECH}$ de fermeture mesurée. Les entrées 301, 302 et 303 peuvent être sous la forme d'une interface d'introduction de données. La sortie 304 peut être sous la forme d'une interface de sortie de données ou d'un écran d'affichage. Le calculateur CAL pour la deuxième turbomachine 2 peut être séparé du calculateur CAL pour la première turbomachine 1.

**Revendications**

1. Procédé d'estimation d'une zone morte ($ZM_{RECH}$) de fermeture d'une première porte (P1) d'une première vanne (VBV1) de décharge montée sur un premier carter (C1) d'une turbomachine à étudier (1) pouvant fonctionner en vol pour propulser un aéronef, le premier carter (C1) délimitant intérieurement un flux primaire (FP1) de gaz de celle-ci, la première porte (P1) étant prévue pour pouvoir être déplacée angulairement par un premier vérin (V1) en fonction d'un premier signal (SC1) de commande du premier vérin (V1) entre l'une et l'autre :

    - d'une première position (PO1) d'ouverture d'un premier orifice (O1) du premier carter (C1) configurée pour décharger par ce premier orifice (O1) une partie du flux primaire (FP1) dans un flux secondaire (FS1) de gaz situé à l'extérieur du premier carter (C1),

- et d'une première position (PF1) de fermeture du premier orifice (O1) configurée pour empêcher le flux primaire (FP1) de passer à travers le premier orifice (O1),

la première porte (P1) étant munie d'un premier joint (J1) d'étanchéité au gaz, apte à être comprimé contre un premier bord (B1) du premier orifice (O1) dans la première position (PF1) de fermeture pour étanchéifier la fermeture du premier orifice (O1),

**caractérisé en ce que**

on mesure, pour la turbomachine à étudier (1) fonctionnant en vol, la première position réelle (PRV1) du premier vérin (V1) lorsque le premier signal (SC1) de commande est égal à un premier signal (SCPF1) de consigne de fermeture de la première porte (P1),

on détermine à partir de la première position réelle (PRV1) un angle de statisme mesuré ($\text{Stat}_{\text{MES}}$) de la première porte (P1) par rapport au premier carter (C 1),

on détermine, pour la turbomachine à étudier (1) fonctionnant en vol, une zone morte de fermeture mesurée ($\text{ZM}_{\text{RECH}}$) de la première porte (P1), dans laquelle le premier joint (J1) reste comprimé et étanchéifie ainsi la fermeture du premier orifice (O1), par le fait que la zone morte de fermeture mesurée ($\text{ZM}_{\text{RECH}}$) est égale à une zone morte de référence ($\text{ZM}_{\text{REF}}$), qui a été prédéterminée en fonctionnement au sol sur une turbomachine de référence (2) pouvant fonctionner en vol et au sol, à laquelle a été ajouté l'angle de statisme mesuré ($\text{Stat}_{\text{MES}}$) et à laquelle a été soustrait un angle de statisme de référence ($\text{Stat}_{\text{REF}}$) ayant été prédéterminé sur la turbomachine de référence (2) fonctionnant en vol pour propulser un aéronef.

2. Procédé d'estimation suivant la revendication 1, **caractérisé en ce que**

la turbomachine de référence (2) a une deuxième porte (VBV2) d'une deuxième vanne (VBV2) de décharge montée sur un deuxième carter (C2) de la turbomachine (2) de référence, le deuxième carter (C2) délimitant intérieurement un flux primaire (FP2) de gaz de la turbomachine (2) de référence, la deuxième porte (P2) étant prévue pour pouvoir être déplacée angulairement par un deuxième vérin (V2) en fonction d'un deuxième signal (SC2) de commande du deuxième vérin (V2) entre l'une et l'autre :

- d'une deuxième position (PO2) d'ouverture d'un deuxième orifice (O2) du deuxième carter (C2) pour décharger par ce deuxième orifice (02) une partie du flux primaire (FP2) dans un flux secondaire (FS2) de gaz de la turbomachine (2) de référence situé à l'extérieur du deuxième carter (C2),

- et d'une deuxième position (PF2) de fermeture du deuxième orifice (O2) pour empêcher le flux primaire (FP2) de passer à travers le deuxième orifice (O2),

la deuxième porte (P2) étant munie d'un deuxième joint (J2) d'étanchéité au gaz, apte à être comprimé contre un deuxième bord (B2) du deuxième orifice (O2) dans la deuxième position (PF2) de fermeture pour étanchéifier la fermeture du deuxième orifice (O2).

3. Procédé d'estimation suivant la revendication 2, **caractérisé en ce que**

on détermine, pour la turbomachine de référence (2) fonctionnant au sol, la zone morte ($\text{ZM}_{\text{REF}}$) de référence qui est une deuxième plage angulaire ($\text{ZM}_{\text{REF}}$) de fermeture de la deuxième porte (P2), pendant laquelle entre la deuxième position (PF2) de fermeture et la deuxième position (PO2) d'ouverture le deuxième joint (J2) reste comprimé et étanchéifie ainsi la fermeture du deuxième orifice (O2).

4. Procédé d'estimation suivant la revendication 2 ou 3, **caractérisé en ce que**

on détermine, pour la turbomachine à étudier (1) fonctionnant en vol, un premier régime (N2_1) de rotation d'un premier compresseur (CHP1) haute pression de la turbomachine (1) à étudier, et des paramètres (N2_1, Patm1, Alt1) de fonctionnement mesurés comprenant au moins une grandeur choisie parmi une première pression atmosphérique (Patm1) et une première altitude (Alt1),

on détermine, à partir d'un modèle (MOD) de la turbomachine de référence (2) donnant un deuxième angle ($\text{Stat}_{\text{REF}}$) de porte de la turbomachine de référence (2) par rapport au deuxième carter (C2) de la turbomachine de référence (2) en fonction d'un deuxième régime (N2_2) de rotation du deuxième compresseur (CHP2) haute pression de la turbomachine de référence (2) et d'une deuxième pression atmosphérique (Patm2) de la turbomachine de référence (2) ou d'une deuxième altitude (Alt2) de fonctionnement de la turbomachine de référence (2), l'angle ($\text{Stat}_{\text{REF}}$) de statisme de référence, qui est le deuxième angle ($\text{Stat}_{\text{REF}}$) de porte de la turbomachine de référence (2), qui correspond selon le modèle (MOD) aux paramètres (N2_1, Patm1, Alt1) de fonctionnement mesurés, le deuxième angle (Stat$_{REF}$) de porte correspondant à un angle (Stat$_{REF}$) de la deuxième porte (P2) par rapport au deuxième carter (C2), qui a été déterminé à partir d'une deuxième position réelle (PRV2) du deuxième vérin (V2), ayant elle-même été mesurée pour la turbomachine de référence (2) fonctionnant en vol, lorsque le deuxième signal (SC2) de commande est égal à un deuxième signal (SCPF2) de consigne de fermeture de la deuxième porte (P2).

5. Dispositif d'estimation d'une zone morte (ZM$_{Rech}$) de fermeture d'une première porte (P1) d'une première vanne (VBV1) de décharge montée sur un premier carter (C1) d'une turbomachine à étudier (1) pouvant fonctionner en vol pour propulser un aéronef, le premier carter (C1) délimitant intérieurement un flux primaire (FP1) de gaz de celle-ci, la première porte (P1) étant prévue pour pouvoir être déplacée angulairement par un premier vérin (V1) en fonction d'un premier signal (SC1) de commande du premier vérin (V1) entre l'une et l'autre :

    - d'une première position (PO1) d'ouverture d'un premier orifice (O1) du premier carter (C1) configurée pour décharger par ce premier orifice (O1) une partie du flux primaire (FP1) dans un flux secondaire (FS1) de gaz situé à l'extérieur du premier carter (C1),
    - et d'une première position (PF1) de fermeture du premier orifice (O1) configurée pour empêcher le flux primaire (FP1) de passer à travers le premier orifice (O1),

        la première porte (P1) étant munie d'un premier joint (J1) d'étanchéité au gaz, apte à être comprimé contre un premier bord (B1) du premier orifice (O1) dans la première position (PF1) de fermeture pour étanchéifier la fermeture du premier orifice (O1),
**caractérisé en ce que** le dispositif d'estimation comporte
un moyen de mesure pour mesurer, pour la turbomachine (1) à étudier fonctionnant en vol, la première position réelle (PRV1) du premier vérin (V1) lorsque le premier signal (SC1) de commande est égal à un premier signal (SCPF1) de consigne de fermeture de la première porte (P1),
un calculateur (CAL) configuré pour :

        - déterminer à partir de la première position réelle (PRV1) un angle de statisme mesuré (Stat$_{MES}$) de la première porte (P1) par rapport au premier carter (C 1),
        - déterminer, pour la turbomachine à étudier (1) fonctionnant en vol, une zone morte de fermeture mesurée (ZM$_{RECH}$) de la première porte (P1), dans laquelle le premier joint (J1) reste comprimé et étanchéifie ainsi la fermeture du premier orifice (O1), par le fait que la zone morte de fermeture mesurée (ZM$_{RECH}$) est égale à une zone morte de référence (ZM$_{REF}$), qui a été prédéterminée en fonctionnement au sol sur une turbomachine de référence (2) pouvant fonctionner en vol et au sol, à laquelle a été ajouté l'angle de statisme mesuré (Stat$_{MES}$) et à laquelle a été soustrait un angle de statisme de référence (Stat$_{REF}$) ayant été prédéterminé sur la turbomachine de référence (2) fonctionnant en vol pour propulser un aéronef.

6. Dispositif d'estimation suivant la revendication 5, **caractérisé en ce que** la turbomachine de référence (2) a une deuxième porte (VBV2) d'une deuxième vanne (VBV2) de décharge montée sur un deuxième carter (C2), le deuxième carter (C2) délimitant intérieurement un flux primaire (FP2) de gaz de la turbomachine de référence, la deuxième porte (P2) étant prévue pour pouvoir être déplacée angulairement par un deuxième vérin (V2) en fonction d'un deuxième signal (SC2) de commande du deuxième vérin (V2) entre l'une et l'autre :

    - d'une deuxième position (PO2) d'ouverture d'un deuxième orifice (O2) du deuxième carter (C2) pour décharger par ce deuxième orifice (O2) une partie du flux primaire (FP2) dans un flux secondaire (FS2) de gaz de la turbomachine de référence situé à l'extérieur du deuxième carter (C2),
    - et d'une deuxième position (PF2) de fermeture du deuxième orifice (O2) pour empêcher le flux primaire (FP2) de passer à travers le deuxième orifice (O2),

la deuxième porte (P2) étant munie d'un deuxième joint (J2) d'étanchéité au gaz, apte à être comprimé contre un deuxième bord (B2) du deuxième orifice (O2) dans la deuxième position (PF2) de fermeture pour étanchéifier la fermeture du deuxième orifice (O2).

7. Dispositif d'estimation suivant la revendication 6, **caractérisé en ce qu'**il comporte un moyen de mesure pour déterminer, pour la turbomachine de référence (2) fonctionnant au sol, la zone morte (ZM$_{REF}$) de référence qui est une deuxième plage angulaire (ZM$_{REF}$) de fermeture de la deuxième porte (P2), pendant laquelle entre la deuxième position (PF2) de fermeture et la deuxième position (PO2) d'ouverture le deuxième joint (J2) reste comprimé et étanchéifie ainsi la fermeture du deuxième orifice (O2).

8. Dispositif d'estimation suivant la revendication 6, **caractérisé en ce qu'**il comporte des capteurs de mesure embarqués sur la première turbomachine (1) pour déterminer, pour la turbomachine à étudier (1) fonctionnant en vol, un premier régime (N2_1) de rotation d'un premier compresseur (CHP1) haute pression de la turbomachine (1), et des paramètres (N2_1, Patm1, Alt1) de fonctionnement mesurés comprenant au moins une grandeur choisie parmi une première pression atmosphérique (Patm1) et une première altitude (Alt1),

le calculateur (CAL) étant configuré pour déterminer, à partir d'un modèle (MOD) de la turbomachine de référence (2) donnant un deuxième angle ($Stat_{REF}$) de porte de la turbomachine de référence (2) par rapport au deuxième carter (C2) de la turbomachine de référence (2) en fonction d'un deuxième régime (N2_2) de rotation du deuxième compresseur (CHP2) haute pression de la turbomachine de référence (2) et d'une deuxième pression atmosphérique (Patm2) de la turbomachine de référence (2) ou d'une deuxième altitude (Alt2) de fonctionnement de la turbomachine de référence (2), l'angle ($Stat_{REF}$) de statisme de référence, qui est le deuxième angle ($Stat_{REF}$) de porte de la turbomachine de référence (2), qui correspond selon le modèle (MOD) aux paramètres (N2_1, Patm1, Alt1) de fonctionnement mesurés,

un moyen de mesure pour mesurer, pour la turbomachine de référence (2) fonctionnant en vol, une deuxième position réelle (PRV2) du deuxième vérin (V2), lorsque le deuxième signal (SC2) de commande est égal à un deuxième signal (SCPF2) de consigne de fermeture de la deuxième porte (P2),

le calculateur (CAL) étant configuré pour déterminer le deuxième angle ($Stat_{REF}$) de porte correspondant à l'angle ($Stat_{REF}$) de la deuxième porte (P2) par rapport au deuxième carter (C2), à partir de la deuxième position réelle (PRV2) du deuxième vérin (V2), ayant été mesurée.

**Patentansprüche**

1. Verfahren zur Schätzung einer Totzone ($ZM_{RECH}$) für das Schließen einer ersten Tür (P1) eines ersten Entlastungsventils (VBV1), die auf einem ersten Gehäuse (C1) einer zu untersuchenden Turbomaschine (1) angebracht ist, die im Flug zum Antrieb eines Fluggeräts im Betrieb sein kann, wobei das erste Gehäuse (C1) innen einen primären Gasstrom (FP1) derselben begrenzt, wobei der erste Tür (P1) vorgesehen ist, von einem ersten Zylinder (V1) in Abhängigkeit von einem ersten Steuersignal (SC1) des ersten Zylinders (V1) winklig verlagert werden zu können zwischen der einen und der anderen:

- einer ersten Öffnungsposition (PO1) einer ersten Öffnung (O1) des ersten Gehäuses (C1), die dazu ausgelegt ist, durch diese erste Öffnung (O1) einen Teil des primären Stroms (FP1) in einen sekundären Gasstrom (FS1) abzuführen, der sich außerhalb des ersten Gehäuses (C1) befindet,
- und einer ersten Verschlussposition (PF1) der ersten Öffnung (01), die dazu ausgelegt ist zu verhindern, dass der primäre Strom (FP1) durch die erste Öffnung (O1) verläuft,

wobei die erste Tür (P1) mit einer ersten gasdichten Dichtung (J1) ausgestattet ist, die imstande ist, an einem ersten Rand (B1) der ersten Öffnung (O1) in der ersten Verschlussposition (FP1) komprimiert zu sein, um den Verschluss der ersten Öffnung (O1) abzudichten, **dadurch gekennzeichnet, dass**

für die zu untersuchende Turbomaschine (1), die im Flug im Betrieb ist, die erste Ist-Position (PRV1) des ersten Zylinders (V1) gemessen wird, wenn das erste Steuersignal (SC1) gleich einem ersten Sollsignal (SCPF1) zum Schließen der ersten Tür (P1) ist,

ausgehend von der ersten Ist-Position (PRV1) ein gemessener Statikwinkel ($Stat_{MES}$) der ersten Tür (P1) im Verhältnis zum ersten Gehäuse (C1) bestimmt wird,

für die zu untersuchende Turbomaschine (1), die im Flug im Betrieb ist, eine gemessene Schließtotzone ($ZM_{RECH}$) der ersten Tür (P1) bestimmt wird, in welcher die erste Dichtung (J1) komprimiert bleibt und somit den Verschluss der ersten Öffnung (O1) abdichtet, dadurch, dass die gemessene Schließtotzone ($ZM_{RECH}$) gleich einer Referenztotzone ($ZM_{REF}$) ist, die im Betrieb am Boden für eine Referenzturbomaschine (2) vorherbestimmt wurde, die im Flug und am Boden im Betrieb sein kann, zu der der gemessene Statikwinkel ($Stat_{MES}$) addiert wurde und von der ein Referenzstatikwinkel ($Stat_{REF}$) abgezogen wurde, der für die Referenzturbomaschine (2) vorherbestimmt wurde, die im Flug im Betrieb ist, um ein Fluggerät anzutreiben.

2. Schätzungsverfahren nach Anspruch 1, **dadurch gekennzeichnet, dass**

die Referenzturbomaschine (2) eine zweite Tür (VBV2) eines zweiten Entlastungsventils (VBV2) hat, die auf einem zweiten Gehäuse (C2) der Referenzturbomaschine (2) angebracht ist, wobei das zweite Gehäuse (C2) innen einen primären Gasstrom (FP2) der Referenzturbomaschine (2) begrenzt, wobei die zweite Tür (P2) vorgesehen ist, von einem zweiten Zylinder (V2) in Abhängigkeit von einem zweiten Steuersignal (SC2) des zweiten Zylinders (V2) winklig verlagert werden zu können zwischen der einen und der anderen:

> - einer zweiten Öffnungsposition (PO2) einer zweiten Öffnung (O2) des zweiten Gehäuses (C2), um durch diese zweite Öffnung (O2) einen Teil des primären Stroms (FP2) in einen sekundären Gasstrom (FS2) der Referenzturbomaschine (2) abzuführen, der sich außerhalb des zweiten Gehäuses (C2) befindet,
> - und einer zweiten Verschlussposition (PF2) der zweiten Öffnung (O2), um zu verhindern, dass der primäre Strom (FP2) durch die zweite Öffnung (O2) verläuft,

wobei die zweite Tür (P2) mit einer zweiten gasdichten Dichtung (J2) ausgestattet ist, die imstande ist, an einem zweiten Rand (B2) der zweiten Öffnung (O2) in der zweiten Verschlussposition (PF2) komprimiert zu sein, um den Verschluss der zweiten Öffnung (O2) abzudichten.

3. Schätzungsverfahren nach Anspruch 2, **dadurch gekennzeichnet, dass**
für die Referenzturbomaschine (2), die am Boden im Betrieb ist, die Referenztotzone (ZM$_{REF}$) bestimmt wird, die ein zweiter Verschlusswinkelbereich (ZM$_{REF}$) der zweiten Tür (P2) ist, während dessen zwischen der zweiten Verschlussposition (PF2) und der zweiten Öffnungsposition (PO2) die zweite Dichtung (J2) komprimiert bleibt und somit den Verschluss der zweiten Öffnung (O2) abdichtet.

4. Schätzungsverfahren nach Anspruch 2 oder 3, **dadurch gekennzeichnet, dass**

> für die zu untersuchende Turbomaschine (1), die im Flug im Betrieb ist, eine erste Drehzahl (N2_1) eines ersten Hochdruckkompressors (CHP1) der zu untersuchenden Turbomaschine (1) bestimmt wird, und wobei gemessene Betriebsparameter (N2_1, Patm1, Alt1) mindestens eine Größe umfassen, die aus einem ersten atmosphärischen Druck (Patm1) und einer ersten Höhe (Alt1) ausgewählt ist,
> aus einem Modell (MOD) der Referenzturbomaschine (2), das einen zweiten Türwinkel (Stat$_{REF}$) der Referenzturbomaschine (2) im Verhältnis zum zweiten Gehäuse (C2) der Referenzturbomaschine (2) in Abhängigkeit von einer zweiten Drehzahl (N2_2) des zweiten Hochdruckkompressors (CHP2) der Referenzturbomaschine (2) und einem zweiten atmosphärischen Druck (Patm2) der Referenzturbomaschine (2) oder einer zweiten Betriebshöhe (Alt2) der Referenzturbomaschine (2) ergibt, der Referenzstatikwinkel (Stat$_{REF}$) bestimmt wird, der der zweite Türwinkel (Stat$_{REF}$) der Referenzturbomaschine (2) ist, der gemäß dem Modell (MOD) den gemessenen Betriebsparametern (N2_1, Patm1, Alt1) entspricht,
wobei der zweite Türwinkel (Stat$_{REF}$) einem Winkel (Stat$_{REF}$) der zweiten Tür (P2) im Verhältnis zum zweiten Gehäuse (C2) entspricht, der aus einer zweiten Ist-Position (PRV2) des zweiten Zylinders (V2) bestimmt wurde, die ihrerseits für die im Flug betriebene Referenzturbomaschine (2) gemessen wurde, wenn das zweite Steuersignal (SC2) gleich einem zweiten Sollsignal (SCPF2) zum Schließen der zweiten Tür (P2) ist.

5. Vorrichtung zur Schätzung einer Totzone (ZM$_{Rech}$) für das Schließens einer ersten Tür (P1) eines ersten Entlastungsventils (VBV1), die auf einem ersten Gehäuse (C1) einer zu untersuchenden Turbomaschine (1) angebracht ist, die im Flug zum Antrieb eines Fluggeräts im Betrieb sein kann, wobei das erste Gehäuse (C1) innen einen primären Gasstrom (FP1) derselben begrenzt, wobei die erste Tür (P1) vorgesehen ist, von einem ersten Zylinder (V1) in Abhängigkeit von einem ersten Steuersignal (SC1) des ersten Zylinders (V1) winklig verlagert werden zu können zwischen der einen und der anderen:

> - einer ersten Öffnungsposition (PO1) einer ersten Öffnung (O1) des ersten Gehäuses (C1), die dazu ausgelegt ist, durch diese erste Öffnung (O1) einen Teil des primären Stroms (FP1) in einen sekundären Gasstrom (FS1) abzuführen, der sich außerhalb des ersten Gehäuses (C1) befindet,
> - und einer ersten Verschlussposition (PF1) der ersten Öffnung (01), die dazu ausgelegt ist zu verhindern, dass der primäre Strom (FP1) durch die erste Öffnung (O1) verläuft,

> > wobei die erste Tür (P1) mit einer ersten gasdichten Dichtung (J1) ausgestattet ist, die imstande ist, an einem ersten Rand (B1) der ersten Öffnung (O1) in der ersten Verschlussposition (PF1) komprimiert zu sein, um den Verschluss der ersten Öffnung (O1) abzudichten,
> > **dadurch gekennzeichnet, dass** die Schätzungsvorrichtung aufweist
> > ein Messmittel, um für die zu untersuchende Turbomaschine (1), die im Flug im Betrieb ist, die erste Ist-Position (PRV1) des ersten Zylinders (V1) zu messen, wenn das erste Steuersignal (SC1) gleich einem ersten Sollsignal (SCPF1) zum Schließen der ersten Tür (P1) ist,
einen Rechner (CAL), der ausgelegt ist, um:

- aus der ersten Ist-Position (PRV1) einen gemessenen Statikwinkel (Stat$_{MES}$) der ersten Tür (P1) im Verhältnis zum ersten Gehäuse (C1) zu bestimmen,
- für die zu untersuchende Turbomaschine (1), die im Flug im Betrieb ist, eine gemessene Schließtotzone (ZM$_{RECH}$) der ersten Tür (P1) zu bestimmen, in welcher die erste Dichtung (JI) komprimiert bleibt und somit den Verschluss der ersten Öffnung (O1) abdichtet, dadurch, dass die gemessene Schließtotzone (ZM$_{RECH}$) gleich einer Referenztotzone (ZM$_{REF}$) ist, die im Betrieb am Boden für eine Referenzturbomaschine (2) vorherbestimmt wurde, die im Flug und am Boden im Betrieb sein kann, zu der der gemessene Statikwinkel (Stat$_{MES}$) addiert wurde und von der ein Referenzstatikwinkel (Stat$_{REF}$) abgezogen wurde, der für die Referenzturbomaschine (2) vorherbestimmt wurde, die im Flug im Betrieb ist, um ein Fluggerät anzutreiben.

6. Schätzungsvorrichtung nach Anspruch 5, **dadurch gekennzeichnet, dass** die Referenzturbomaschine (2) eine zweite Tür (VBV2) eines zweiten Entlastungsventils (VBV2) hat, die auf einem zweiten Gehäuse (C2) angebracht ist, wobei das zweite Gehäuse (C2) innen einen primären Gasstrom (FP2) der Referenzturbomaschine begrenzt, wobei die zweite Tür (P2) vorgesehen ist, von einem zweiten Zylinder (V2) in Abhängigkeit von einem zweiten Steuersignal (SC2) des zweiten Zylinders (V2) winklig verlagert werden zu können zwischen der einen und der anderen:

- einer zweiten Öffnungsposition (PO2) einer zweiten Öffnung (O2) des zweiten Gehäuses (C2), um durch diese zweite Öffnung (O2) einen Teil des primären Stroms (FP2) in einen sekundären Gasstrom (FS2) der Referenzturbomaschine (2) abzuführen, der sich außerhalb des zweiten Gehäuses (C2) befindet,
- und einer zweiten Verschlussposition (PF2) der zweiten Öffnung (O2), um zu verhindern, dass der primäre Strom (FP2) durch die zweite Öffnung (O2) verläuft,

wobei die zweite Tür (P2) mit einer zweiten gasdichten Dichtung (J2) ausgestattet ist, die imstande ist, an einem zweiten Rand (B2) der zweiten Öffnung (O2) in der zweiten Verschlussposition (FP2) komprimiert zu sein, um den Verschluss der zweiten Öffnung (O2) abzudichten.

7. Schätzungsvorrichtung nach Anspruch 6, **dadurch gekennzeichnet, dass** sie ein Messmittel aufweist, um für die Referenzturbomaschine (2), die auf dem Boden im Betrieb ist, die Referenztotzone (ZM$_{REF}$) zu bestimmen, die ein zweiter Verschlusswinkelbereich (ZM$_{REF}$) der zweiten Tür (P2) ist, während dessen zwischen der zweiten Verschlussposition (PF2) und der zweiten Öffnungsposition (PO2) die zweite Dichtung (J2) komprimiert bleibt und somit den Verschluss der zweiten Öffnung (O2) abdichtet.

8. Schätzungsvorrichtung nach Anspruch 6, **dadurch gekennzeichnet, dass** sie Messsensoren aufweist, die an der ersten Turbomaschine (1) angebaut sind, um für die zu untersuchende Turbomaschine (1), die im Flug im Betrieb ist, eine erste Drehzahl (N2_1) eines ersten Hochdruckkompressors (CHP1) der Turbomaschine (1) zu bestimmen, und wobei gemessene Betriebsparameter (N2_1, Patm1, Alt1) mindestens eine Größe umfassen, die aus einem ersten atmosphärischen Druck (Patm1) und einer ersten Höhe (Alt1) ausgewählt ist,

wobei der Rechner (CAL) ausgelegt ist, um aus einem Modell (MOD) der Referenzturbomaschine (2), das einen zweiten Türwinkel (Stat$_{REF}$) der Referenzturbomaschine (2) im Verhältnis zum zweiten Gehäuse (C2) der Referenzturbomaschine (2) in Abhängigkeit von einer zweiten Drehzahl (N2_2) des zweiten Hochdruckkompressors (CHP2) der Referenzturbomaschine (2) und einem zweiten atmosphärischen Druck (Patm2) der Referenzturbomaschine (2) oder einer zweiten Betriebshöhe (Alt2) der Referenzturbomaschine (2) ergibt, den Referenzstatikwinkel (Stat$_{REF}$) zu bestimmen, der der zweite Türwinkel (Stat$_{REF}$) der Referenzturbomaschine (2) ist, der gemäß dem Modell (MOD) den gemessenen Betriebsparametern (N2_1, Patm1, Alt1) entspricht,
ein Messmittel, um für die Referenzturbomaschine (2), die im Flug im Betrieb ist, eine zweite Ist-Position (PRV2) des zweiten Zylinders (V2) zu messen, wenn das zweite Steuersignal (SC2) gleich einem zweiten Schließsollwertsignal (SCPF2) der zweiten Tür (P2) ist,
wobei der Rechner (CAL) ausgelegt ist, um den zweiten Türwinkel (Stat$_{REF}$) zu bestimmen, der dem Winkel (Stat$_{REF}$) der zweiten Tür (P2) im Verhältnis zum zweiten Gehäuse (C2) aus der zweiten Ist-Position (PRV2) des zweiten Zylinders (V2), die gemessen wurde, entspricht.

**Claims**

1. A method for estimating a closing dead zone ($ZM_{RECH}$) of a first gate (P1) of a first discharge valve (VBV1) mounted on a first casing (C1) of a turbomachine to be investigated (1), which can operate in flight to propel an aircraft, the first casing (C1) delimiting in its inside a primary gas flow (FP1) of the turbomachine, the first gate (P1) being designed to be able to be moved angularly by a first actuator (V1) depending on a first control signal (SC1) of the first actuator (V1) between one and the other of:

    - a first opening position (PO1) of a first orifice (O1) of the first casing (C1) configured to discharge by this first orifice (O1) a portion of the primary flow (FP1) into a secondary gas flow (FS1) located outside the first casing (C1),
    - and a first closing position (PF1) of the first orifice (01) configured to prevent the primary flow (FP1) from passing through the first orifice (01),

    the first gate (P1) being provided with a first gas seal gasket (J1), able to be compressed against a first edge (B1) of the first orifice (O1) in the first closing position (FP1) to seal the closure of the first orifice (O1),
    **characterized in that**
    for the turbomachine to be investigated (1), operating in flight, the first actual position (PRV1) of the first actuator is measured when the first control signal (SC1) is equal to a first set point closing signal (SCPF1) of the first gate (P1),
    based on the first actual position (PRV1), a measured droop angle ($Stat_{MES}$) of the first gate (P1) with respect to the first casing (C1) is determined,
    for the turbomachine to be investigated (1), operating in flight, a measured closing dead zone ($ZM_{RECH}$) of the first gate (P1) is determined, in which the first gasket (J1) remains compressed and thus seals the closure of the first orifice (01), by the fact that the measured closing dead zone ($ZM_{RECH}$) is equal to a reference dead zone ($ZM_{REF}$), which was predetermined during operation on the ground on a reference turbomachine (2) which can operate in flight and on the ground, to which has been added the measured droop angle ($Stat_{MES}$) and from which has been subtracted a reference droop angle ($Stat_{REF}$) which was predetermined on the reference turbomachine (2) operating in flight to propel an aircraft.

2. The estimation method according to claim 1, **characterized in that**

    the reference turbomachine (2) has a second gate (VBV2) of a second discharge valve (VBV2) mounted on a second casing (C2) of the reference turbomachine (2), the second casing delimiting in its inside a primary gas flow (FP2) of the reference turbomachine (2), the second gate (P2) being designed to be able to be moved angularly by a second actuator (V2) depending on a second control signal (SC2) of the second actuator (V2) between one and the other of:

        - a second opening position (PO2) of a second orifice (O2) of the second casing (C2) to discharge through this second orifice (O2) a portion of the primary flow (FP2) into a secondary gas flow (FS2) of the reference turbomachine (2) located outside the second casing (C2),
        - and a second closing position (PF2) of the second orifice (O2) to prevent the primary flow (FP2) from passing through the second orifice (O2),

    the second gate (P2) being provided with a second gas seal gasket (J2), able to be compressed against a second edge (B2) of the second orifice (O2) in the second closing position (PF2) to seal the closure of the second orifice (O2).

3. The estimation method according to claim 2, **characterized in that**
   for the reference turbomachine operating on the ground, the reference dead zone ($ZM_{REF}$) is determined, which is a second angular closing range ($ZM_{REF}$) of the second gate (P2), during which, between the second closing position (PF2) and the second opening position (PO2), the second gasket (J2) remains compressed and thus seals the closure of the second orifice (02).

4. The estimation method according to claim 2 or 3, **characterized in that**

    for the turbomachine to be investigated (1), operating in flight, a first rotation speed (N2_1) of a first high-pressure compressor (CHP1) of the turbomachine to be investigated (1), and measured operating parameters (N2_1, Patm1, Alt1) comprising at least one quantity selected from among a first atmospheric pressure (Patm1) and a first altitude (Alt1) are determined,
    based on a model (MOD) of the reference turbomachine (2) giving a second gate angle

($Stat_{REF}$) of the reference turbomachine (2) with respect to the second casing (C2) of the reference turbomachine, depending on a second rotation speed (N2_2) of the second high-pressure compressor (CHP2) of the reference turbomachine (2) and on a second atmospheric pressure (Patm2) of the reference turbomachine (2) or on a second operating altitude (Alt2) of the reference turbomachine (2), the reference droop angle ($Stat_{REF}$) is determined, which is the second gate angle ($Stat_{REF}$) of the reference turbomachine (2) which corresponds according to the model (MOD) to the measured operating parameters (N2_1, Patm1, Alt1),

the second gate angle ($Stat_{REF}$) corresponding to an angle ($Stat_{REF}$) of the second gate (P2) with respect to the second casing (C2), which has been determined based on a second actual position (PRV2) of the second actuator (V2), having itself been measured for the reference turbomachine (2) operating in flight, when the second control signal (SC2) is equal to a second set point closing signal (SCPF2) of the second gate (P2).

5. A device for estimating a closing dead zone ($ZM_{RECH}$) of a first gate (P1) of a first discharge valve (VBV1) mounted on a first casing (C1) of a turbomachine to be investigated (1) which can operate in flight to propel an aircraft, the first casing (C1) delimiting in its inside the primary gas flow (FP1) of the turbomachine, the first gate (P1) being designed to be able to be moved angularly by a first actuator (V1) depending on a first control signal (SC1) of the first actuator (V1) between one and the other of:

- a first opening position (PO1) of a first orifice (O1) of the first casing (C1) configured to discharge through this first orifice (O1) a portion of the primary flow (FP1) into a secondary gas flow (FS1) located outside the first casing (C1),
- and a first closing position (PF1) of the first orifice (O1) configured to prevent the primary flow (FP1) from passing through the first orifice (O1),

the first gate (P1) being provided with a first gas seal gasket (J1), able to be compressed against a first edge (B1) of the first orifice (O1) in the first closing position (FP1) to seal the closure of the first orifice (O1), **characterized in that** the estimation device comprises a measurement means for measuring, for the turbomachine (1) to be investigated operating in flight, the first actual position (PRV1) of the first actuator (V1) when the first control signal (SC1) is equal to a first set point closing signal (SCPF1) of the first gate (P1), a calculator (CAL) configured to:

- determine, based on the first actual position (PRV1), a measured droop angle ($Stat_{MES}$) of the first gate (P1) with respect to the first casing (C1),
- determine, for the turbomachine to be investigated (1) operating in flight, a measured closing dead zone ($ZM_{RECH}$) of the first gate (P1), in which the first gasket (J1) remains compressed and thus seals the closure of the first orifice (O1), by the fact that the measured closing dead zone ($ZM_{RECH}$) is equal to a reference dead zone ($ZM_{REF}$), which was predetermined during operation on the ground on a reference turbomachine (2) which can operate in flight and on the ground, to which has been added the measured droop angle ($Stat_{MES}$) and from which has been subtracted a reference droop angle ($Stat_{REF}$) which was predetermined on the reference turbomachine (2) operating in flight for propelling an aircraft.

6. The estimation device according to claim 5, **characterized in that** the reference turbomachine (2) has a second gate (VBV2) of a second discharge valve (VBV2) mounted on a second casing (C2), the second casing (C2) delimiting in its inside a primary gas flow (FP2) of the reference turbomachine, the second gate (P2) being designed to be able to be moved angularly by a second actuator (V2) depending on a second control signal (SC2) of the second actuator (V2) between one and the other of:

- a second opening position (PO2) of a second orifice (O2) of the second casing (C2) to discharge through this second orifice (O2) a portion of the primary flow (FP2) into a secondary gas flow (FS2) of the reference turbomachine located outside the second casing (C2),
- and a second closing position (PF2) of the second orifice (O2) to prevent the primary flow (FP2) from passing through the second orifice (O2),

the second gate (P2) being provided with a second gas seal gasket (J2), able to be compressed against a second edge (B2) of the second orifice (O2) in the second closing position (PF2) to seal the closure of the second orifice (O2).

7. The estimation device according to claim 6, **characterized in that** it comprises a measurement means for determining, for the reference turbomachine (2) operating on the ground, the reference dead zone ($ZM_{REF}$), which is a second angular closing range ($ZM_{REF}$) of the second gate (P2), during which, between the second closing position (PF2) and the second opening position (PO2), the second gasket (J2) remains compressed and thus seals the closure of the second orifice (O2).

8.   The estimation device according to claim 6, **characterized in that** it comprises on-board measurement sensors of the first turbomachine (1) to determine, for the turbomachine to be investigated (1) operating in flight, a first rotation speed ($N2\_1$) of a first high-pressure compressor (CHP1) of the turbomachine (1), and measured operating parameters ($N2\_1$, Patm1, Alt1) comprising at least one quantity selected from among a first atmospheric pressure (Patm1) and a first altitude (Alt1),

the calculator (CAL) being configured to determine, from a model (MOD) of the reference turbomachine (2) giving a second gate angle ($Stat_{REF}$) of the reference turbomachine (2) with respect to the second casing (C2) of the reference turbomachine (2) depending on a second rotation speed ($N2\_2$) of the second high-pressure compressor (CHP2) of the reference turbomachine (2) and from a second atmospheric pressure (Patm2) of the reference turbomachine (2) or from a second operating altitude (Alt2) of the reference turbomachine (2), the reference droop angle ($Stat_{REF}$), which is the second gate angle ($Stat_{REF}$) of the reference turbomachine (2) which corresponds according to the model (MOD) to the measured operating parameters ($N2\_1$, Patm1, Alt1),

a measurement means for measuring, for the reference turbomachine (2) operating in flight, a second actual position (PRV2) of the second actuator (V2), when the second control signal (SC2) is equal to a second set point closing signal (SCPF2) of the second gate (P2),

the calculator (CAL) being configured to determine the second gate angle ($Stat_{REF}$) corresponding to the angle ($Stat_{REF}$) of the second gate (P2) with respect to the second casing (C2), based on the second actual position (PRV2) of the second actuator (V2) which was measured.

FIG. 1

# FIG. 2

FS1,FS2,32

C1,C2,26

34

1,2

10

12

36

40

44

48

FP1,FP2,22

51

38,381,382

P1,P2,50

42

14

Y
Z ⊙ → X

EP 3 969 736 B1

## FIG. 3

EP 3 969 736 B1

EP 3 969 736 B1

## FIG. 4

VBV1, VBV2, 48

BI1, BI2

51

40

P1,P2,50

EP2comp

J1, J2

42

38,381,382

J1,J2

F1,F2

ANG2

O1,O2    B1,B2

C1,C2,26

## FIG. 5

EP1comp

ZMRECH

EP2comp

P1,P2,50

B1,B2

J1

C1,C2,26

20

EP 3 969 736 B1

FIG. 6

FS1,FS2,32

P1,P2,50

PO1,PO2

$F_{VBV}$

F1,F2

J1,J2

$F_{Aero}$

J1,J2

C1,C2,26  O1,O2  38,381,382

FP1,FP2,22

FIG. 7

$F_{maxVBV}$  $F_{VBV}$  $F_{Aero}$

FIG. 8

FS1,FS2,32

P1,P2,50

PF1,PF2

$F_{VBV}$

J1,J2  F1,F2  J1

$F_{joint}$  $F_{joint}$

C1,C2,26  38,381,382

FP1,FP2,22  $F_{Aero}$

FIG. 9

$F_{maxVBV}$  $F_{VBV}$  $F_{joint}$  $F_{Aero}$

FIG. 10

FIG. 11

FIG. 12

EP 3 969 736 B1

# FIG. 13

PF1,PF2

FS1,FS2,32

$F_{VBV}$

P1,P2,50

J1,J2

$F_{joint}$

$F_{joint}$

C1,C2,26

O1,O2

$F_{Aero}$

38,381,382

FP1,FP2,22

# FIG. 14

$F_{maxVBV}$

$F_{VBV}$

$F_{joint}$

$F_{Aero}$

EP 3 969 736 B1

FIG. 15

EP 3 969 736 B1

EP 3 969 736 B1

## FIG. 16

$ZM_{RECH}$ (°)

$EA1_{joint}$

$Stat_{MES} = f(Alt1, N2\_1)$

0°

1

## FIG. 17

$ZM_{REF}$ (°)

$EA2_{joint}$

$Stat_{REF} = f(Alt2, N2\_2)$

0°

2

## FIG. 18

300

$Stat_{MES}$

301

Alt1

302

N2\_1

303

CAL

$ZM_{RECH}$

304

MOD

## FIG. 19

```
┌─────────────────────────────────┐
│  E7, SC2, SCPF2, PRV2, MOD      │
└─────────────────────────────────┘
                 │
                 ▼
┌─────────────────────────────────┐
│         E4, ZM$_{REF}$          │
└─────────────────────────────────┘
                 │
                 ▼
┌─────────────────────────────────┐
│       E1, PRV1, SCPF1           │
└─────────────────────────────────┘
                 │
                 ▼
┌─────────────────────────────────┐
│     E2, PRV1, Stat$_{MES}$      │
└─────────────────────────────────┘
                 │
                 ▼
┌─────────────────────────────────┐
│    E5, N2_1, Patm1, Alt1        │
└─────────────────────────────────┘
                 │
                 ▼
┌─────────────────────────────────┐
│       E6, Stat$_{REF}$          │
└─────────────────────────────────┘
                 │
                 ▼
┌─────────────────────────────────┐
│       E3, ZM$_{RECH}$           │
└─────────────────────────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007240677 A